# EUROPÄISCHE PATENTANMELDUNG

(11) **EP 4 173 459 A1**
(43) Veröffentlichungstag der Anmeldung: **03.05.2023**
(21) Anmeldenummer: 22200579.5
(22) Anmeldetag: 10.10.2022
(51) Int. Cl.: A01B 63/108, A01B 63/32, F15B 11/00

(54) **HYDRAULIKSYSTEM FÜR EIN LANDWIRTSCHAFTLICHES FAHRZEUG**

(30) Priorität: 29.10.2021 DE 102021128264
(71) Anmelder: Deere & Company, Moline, IL 61265 (US)
(72) Erfinder: Billich, Manuel, Mannheim (DE); Meid, Michael, Mannheim (DE)
(74) Vertreter: Dehnhardt, Florian Christopher

(57) **Zusammenfassung**

Ein Hydrauliksystem (130) weist einen Hauptkreis (120) auf, der mit einem hydraulischem Druck beaufschlagt wird, einen Nebenkreis des Hydrauliksystems (130), der mit einem hydraulischen Druck beaufschlagt wird, ein hydraulisches Steuergerät (120), das zur hydraulischen Schaltung zwischen dem Hauptkreis (120) und dem Nebenkreis dient, einen Frontkraftheber (50), zum Befestigen, Anheben und Absenken von Anbauteilen und - geräten an einer Front des Fahrzeugs, der wenigstens einen hydraulischen Aktuator (70) aufweist, wobei der Frontkraftheber (50) durch den Nebenkreis mit hydraulischem Druck versorgt wird, einen Hydraulikanschluss (100) für Anbauteile und -geräte, der am Nebenkreis vorgesehen ist, ein Steuerventil (90) zum Schalten einer hydraulischen Verbindung des Nebenkreises mit entweder dem Frontkraftheber (50) oder dem Hydraulikanschluss (100) für Anbauteile und -geräte.

## Beschreibung

Die vorliegende Erfindung betrifft ein Hydrauliksystem für ein landwirtschaftliches Fahrzeug zum Betreiben eines Frontkrafthebers.

Landwirtschaftliche Fahrzeuge verfügen üblicherweise über sogenannte Kraftheber an einem vorderen- und hinteren Ende des Fahrzeugs. Kraftheber dienen dazu, Werkzeuge, zusätzliche Bearbeitungsgeräte oder etwa Gewichte an das Fahrzeug anzuhängen und gegebenenfalls mit Antriebsenergie zu versorgen. Die Antriebsenergie kann dabei mechanisch, pneumatisch oder hydraulisch sein.

Kraftheber werden durch hydraulische Vorrichtungen verstellt. Üblicherweise ist dazu wenigstens ein verstellbarer Hydraulikaktuator am Fahrzeug vorgesehen, der von einer Hydraulikpumpe über ein hydraulisches System versorgt wird. Zum Anhängen von Anbauteilen wird der Kraftheber in eine Standardposition gefahren, die das Befestigen des Anbauteils ermöglicht. Meist kommen standardisierte Drei-Punkt-Kraftheber zum Einsatz, so dass Anbauteile ebenfalls einen standardisiertes Anbaugestänge aufweisen. Das Verstellen des Krafthebers findet in der Fahrzeugkabine statt, so dass dort durch entsprechende Kontrollflächen die hydraulischen Aktuatoren bedient werden können.

Die Ansteuerung erfolgt über die Betätigung von hydraulischen Steuergeräten, die sich meist in einem hinteren Fahrzeugbereich oder am Heck befinden. Dies ermöglicht die Zugänglichkeit zu Wartungszwecken der Ventilblöcke, aber gleichzeitig auch die Bedienung von Hydraulikanschlüssen zur Versorgung der Anbauteile.

Für Kraftheber im vorderen Bereich des Fahrzeugs erfolgt die Bedienung ebenfalls in der Fahrzeugkabine. Der Frontkraftheber wird durch eine zusätzliche hydraulische Leitung versorgt, die vom hydraulischen Steuergerät am Heck des Fahrzeugs oder alternativ von der Mitte des Fahrzeugs ausgeht. Die günstigste Variante stellt die Verwendung eines bestehenden hydraulischen Steuergerätes dar. In diesem Fall werden die Leitungen zwischen dem hydraulischen Steuergerät und den Kupplern für Anbauteile oder -geräte zusätzlich mit dem Frontkraftheber verbunden. Da entweder eine Ansteuerung eines an den Kupplern angeschlossenen Anbaugeräts oder -teils oder des Frontkrafthebers erwünscht ist, ist zudem im vorderen Bereich des Traktors ein zusätzliches Ventil zur Aktivierung des Frontkrafthebers verbaut. Soll das angeschlossene Anbaugerät oder -teil versorgt werden, muss der Frontkraftheber über dieses Ventil gesperrt werden. Ist dagegen eine Ansteuerung des Frontkrafthebers erwünscht, muss das Ventil geöffnet werden und zusätzlich sichergestellt werden, dass an den Schnellkupplern kein Anbaugerät oder -teil angeschlossen ist. Übliche Frontkraftheber werden in zwei unterschiedlichen Ansteuerungsarten verwendet.

Bei einfachwirkendem Betrieb wird nur eine Seite des Kolbens im Hydraulikzylinder des Frontkrafthebers durch das Hydrauliksystem betrieben. Dies führt dazu, dass die Anhebebewegung des Frontkrafthebers durch den Druckaufbau in der unteren Hydraulikkammer erfolgt. Die Absenkbewegung findet lediglich passiv statt, durch ein Druckentlasten der unteren Hydraulikkammer und einem Absinken des Frontkrafthebers durch den Einfluss von Eigengewicht oder vom Gewicht des befestigten Anbauteils. Ein aktives Absenken ist nicht möglich. Der einfachwirkende Betrieb eignet sich für die Anwendung von Frontmähern oder generell von Anbauteilen, die mit zeitlicher Verzögerung einem Höhenprofil, etwa dem Geländeverlauf, folgen können.

Der doppeltwirkende Betrieb erfolgt durch aktive Hydraulikdruckregelung auf beiden Seiten des Hydraulikkolbens. Zum Anheben wird dazu die untere Kammer des Hydraulikzylinders mit Druck beaufschlagt, während die obere Kammer drucklos geschaltet wird. Im Absenkbetrieb ist die Situation entsprechend umgekehrt. Der doppeltwirkende Betrieb ermöglicht ein gezieltes Absenken des Frontkrafthebers, unabhängig vom Eigengewicht und dem angehängten Anbaugerät bzw. -teil.

Die Umschaltung zwischen einfach- und doppeltwirkendem Betrieb erfolgt über ein zusätzliches manuelles Ventil in einem vorderen Bereich des Fahrzeugs. Zum Betrieb der Hydraulikleitung für den Frontkraftheber ist diese mittels einer Abzweigung an den Hydraulikkreislauf angeschlossen.

Zum Absenken des Fronthebers ist ein manuelles Umschalten in den doppeltwirkenden Betrieb notwendig. Der Fahrer muss dafür die Kabine verlassen und manuell am Ventil die Umschaltung vom eventuell eingestellten einfachwirkenden Betrieb vornehmen. Je nach Positionierung des Umschaltventils kann die Zugänglichkeit erschwert sein.

Wenn die Hydraulikleitung für den Frontkraftheber unter Druck gesetzt ist, ist somit gleichzeitig die Hydraulikleitung für die Versorgung der Heckanbauteile unter Druck gesetzt. Dies birgt das Risiko, dass bei Bedienen des Frontkrafthebers gleichzeitig vorhandene Anbauteile bewegt oder angetrieben werden können. Um weitere Fehlbedienung zu vermeiden, wird aus diesen Gründen vermieden, eine mögliche Fernbedienung des Frontkrafthebers an einem vorderen Bereich des Fahrzeugs vorzusehen, die ein Bedienen des Frontkrafthebers außerhalb der Kabine ermöglichen würde.

Es ist die Aufgabe der vorliegenden Erfindung, ein gegenüber dem Stand der Technik verbessertes Hydrauliksystem für Frontkraftheber zur Verfügung zu stellen.

Die Aufgabe wird erfindungsgemäß durch die Lehre nach Patentanspruch 1 gelöst. Weitere vorteilhafte Ausbildungen sind in den Unteransprüchen aufgeführt.

Ein Hydrauliksystem weist einen Hauptkreis des Hydrauliksystems auf, der mit einem hydraulischem Druck beaufschlagt wird, einen Nebenkreis des Hydrauliksystems, der mit einem hydraulischen Druck beaufschlagt wird, ein hydraulisches Steuergerät, das zur hydraulischen Schaltung zwischen dem Hauptkreis und dem Nebenkreis dient, einen Frontkraftheber, zum Befestigen, Anheben und Absenken von Anbauteilen und -geräten an einer Front des Fahrzeugs, der wenigstens einen hydraulischen Aktuator aufweist, wobei der Frontkraftheber durch den Nebenkreis mit hydraulischem Druck versorgt wird, einen Hydraulikanschluss für Anbauteile und -geräte, der am Nebenkreis vorgesehen ist, ein Steuerventil zum Schalten einer hydraulischen Verbindung des Nebenkreises mit entweder dem Frontkraftheber oder dem Hydraulikanschluss für Anbauteile und -geräte.

Das Hydrauliksystem ermöglicht die Versorgung des Frontkrafthebers mit hydraulischem Druck, ohne gleichzeitig die externen Anschlüsse für die Anbauteile und -geräte mit hydraulischem Druck zu versorgen. Durch die Anordnung wird sichergestellt, dass zum Zeitpunkt der Bedienung angeschlossene externe Bauteile und -geräte nicht unbeabsichtigt betrieben werden können. Die Arbeitssicherheit ist somit sichergestellt und gefährliche Betriebszustände des Hydrauliksystems sind ausgeschlossen.

Der Nebenkreis kann eine Umschaltung des Frontkrafthebers ermöglichen, zwischen einem einfachwirkenden und einem doppeltwirkenden Betrieb des hydraulischen Aktuators.

Die Umschaltung erlaubt die Verwendung des Frontkrafthebers für Anwendungen, in denen das Anbauteil oder -gerät dem Terrain während der Fahrt folgen soll, wofür der einfachwirkende Betrieb vorgesehen ist. Bei der Montage der Anbauteile oder -geräte muss der Frontkraftheber in eine Koppelposition gebracht werden. Dies ist im einfachwirkenden Betrieb nur eingeschränkt möglich, da das Absenken nicht durch die Hydraulik erfolgen kann. Die Umschaltbarkeit erweitert den Einsatzbereich des Frontkrafthebers und die Bedienmöglichkeiten.

In einer Ausbildung kann die Umschaltung als Teil des Steuerventils des Nebenkreises ausgebildet sein.

Die Integration der Umschaltung verkleinert das Hydrauliksystem. Die Bedienperson findet alle Komponenten an einem Ort, die Zugänglichkeit wird verbessert. Meist wird das Steuerventil in einem vorderen Bereich des Fahrzeugs angebracht. Dies erlaubt die Bedienung zeitgleich mit der Handhabung des Frontkrafthebers.

Die Umschaltung kann separat vom Steuerventil betätigt werden.

Das Steuerventil dient dem Aufschalten von hydraulischem Druck auf entweder dem Frontkraftheber oder den Hydraulikanschlüssen. Die separate Betätigung zur Änderung mit einfach- oder doppeltwirkendem Betrieb vermeidet ein gleichzeitiges Umschalten des Nebenkreises. Hierdurch wird der Bedienkomfort erhöht, wie auch die Sicherheit, da ein versehentliches Betätigen von angeschlossenen Anbauteilen und -geräten verhindert wird.

Bei einer Weiterbildung kann das Steuerventil eine einstellbare Drossel oder einen einstellbaren Volumenstromregler aufweisen, zur Einstellung der Absinkgeschwindigkeit des hydraulischen Aktuators.

Im Frontkraftheber kann eine Vielzahl von Anbauteilen und -geräten vorgesehen werden. Diese weisen ein unterschiedliches Gewicht auf, und benötigen jeweils eine andere Bedienung. Durch eine Einstellung der Absinkgeschwindigkeit bzw. des Querschnitts der hydraulischen Leitung der unteren Kammer des Aktuators kann ein sicheres Arbeiten gewährleistet werden, wie auch das Vermeiden von Beschädigungen an den Anbauteilen und -geräten. Es ist eine feinere Einstellung der Verfahrgeschwindigkeit des Aktuators möglich. Dies vermeidet, dass bei Anliegen des Betriebsdrucks in der oberen Kammer der Aktuator mit hoher Geschwindigkeit in den unteren Endpunkt fährt.

Die einstellbare Drossel kann ein parallel geschaltetes Rückschlagventil aufweisen. Damit wird nur die Senkgeschwindigkeit über die Drossel beeinflusst.

Das Steuerventil im Nebenkreis kann einen elektrischen Schalter aufweisen, so dass je nach Position des Steuerventils der elektrische Schalter geöffnet oder geschlossen ist.

Der Schalter erlaubt eine Rückmeldung an die Steuerung des Hydrauliksystems über den Zustand des Steuerventils. Üblicherweise ist das Steuerventil handbetätigt. Mit dem elektrischen Schalter ist ein Überprüfen der Position ermöglicht.

Das Hydrauliksystem kann eine Fernbedienung aufweisen, die durch Schließen des elektrischen Schalters aktiviert wird.

Die Fernbedienung kann am Fahrzeug in einem vorderen Bereich nahe dem Frontkraftheber vorgesehen sein. Dabei kann es sich um einen Handschalter am Fahrzeug handeln, der bei Bedienung des Frontkrafthebers durch die Bedienperson verwendet werden kann. Der Begriff Fernbedienung dient der Umschreibung, dass die Funktion der Fernbedienung nicht aus der Kabine gesteuert werden muss, sondern außerhalb erfolgen kann. Die Fernbedienung wird damit erst aktiviert, wenn das Steuerventil in der korrekten Position ist. Hierdurch wird zum einen die Kontrolle außerhalb der Kabine ermöglicht, zum anderen wird eine Fehlbedienung ausgeschlossen und die Sicherheit erhöht.

In einer Ausführung kann die Fernbedienung dazu ausgelegt sein, den Frontkraftheber hydraulisch zu steuern.

Die Fernbedienung erlaubt die Kontrolle über den Frontkraftheber außerhalb der Kabine. Die Bedienperson ist nicht mehr auf die Kontrolloberflächen innerhalb der Kabine angewiesen und sämtliche Arbeitsschritte können direkt am Frontkraftheber erfolgen. Dies erleichtert die Arbeitsbelastung und die direkte Überwachung des Frontkrafthebers, der üblicherweise aus der Fahrzeugkabine nicht einsehbar ist. Durch die Fernbedienung kann das Bedienen sehr exakt erfolgen.

Das hydraulische Steuergerät kann dazu ausgelegt sein, durch die Fernbedienung gesteuert zu werden.

Mittels der Fernbedienung kann das hydraulische Steuergerät bedient werden. Damit kann direkt das Hydrauliksystem kontrolliert werden. Das Steuergerät regelt somit die Druckversorgung für den Frontkraftheber mittels Eingabe an der Fernbedienung.

Das Steuerventil kann dazu ausgelegt sein, automatisch bei Aktivierung der Fernbedienung zwischen der hydraulischen Verbindung des Nebenkreises mit dem Hydraulikanschluss für Anbauteile und -geräte und dem Frontkraftheber umzuschalten.

Die Umschaltung verhindert die Druckbeaufschlagung der Anbauteile und -geräte wodurch die Sicherheit erhöht wird. Des Weiteren entfällt ein weiterer Arbeitsschritt für die Bedienperson.

Die Erfindung und weitere Ausbildungen werden anhand der folgenden Figuren weiter beschrieben. Dabei zeigt:
Figur 1 ein landwirtschaftliches Fahrzeug nach dem Stand der Technik;
Figur 2 ein Hydrauliksystem gemäß der beanspruchten Erfindung;
Figur 3 eine Weiterbildung des erfindungsgemäßen Hydrauliksystems;
Figur 4 eine zusätzliche Weiterbildung des erfindungsgemäßen Hydrauliksystems;
Figur 5 eine weitere Ausbildung des erfindungsgemäßen Hydrauliksystems;
Figur 6 eine Ausbildung des Steuerventils des erfindungsgemäßen Hydrauliksystems.

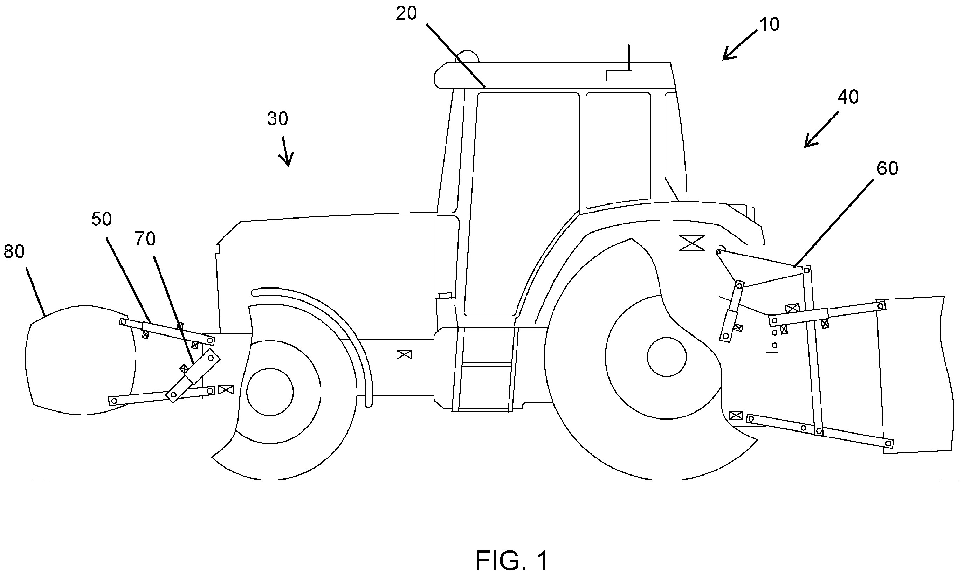

Figur 1 zeigt ein landwirtschaftliches Fahrzeug 10 mit einem Radantrieb. Das Fahrzeug weist eine Kabine 20 auf, mit Kontrollflächen zur Steuerung des Fahrzeugs und zur Regelung weiterer Funktionen, unter anderem die Regelung der Fahrzeughydraulik.

Das Fahrzeug weist eine Frontbereich 30 auf mit dem Hauptantrieb des Fahrzeugs, der Vorderachse und einem Frontkraftheber 60. Der Frontkraftheber 60 ist an einem vorderen Bereich des Chassis ausgebildet und mittels eines beweglichen Gestänges am Fahrzeug gehalten. Mit einem hydraulischen Aktuator 70 wird der Frontkraftheber 50 aufwärts und abwärts bewegt. Durch den Frontkraftheber 50 können unterschiedliche Anbauteile und - geräte an Fahrzeug befestigt werden. Im Heckbereich 40 des Fahrzeugs befindet sich die Hinterachse, der Heckkraftheber 60 und üblicherweise die hydraulischen Steuergeräte, die hier nicht gezeigt sind. Der Heckkraftheber 60 verfügt gleichfalls über hydraulische Aktuatoren, die ein Bewegen des Heckkrafthebers 60 ermöglichen. Ebenfalls sind im Heckbereich 40 die hydraulischen Anschlüsse für die Anbauteile und -geräte vorhanden, die üblicherweise mittels einer Schlauchverbindung hergestellt wird.

Falls das Fahrzeug 10 über ein Steuerventil zur Umschaltung zwischen dem einfachwirkenden und dem doppeltwirkenden Betrieb des Aktuators 70 für den Frontkraftheber 50 verfügt, befindet sich dieses üblicherweise im Frontbereich 30 des Fahrzeugs 10.

Im vorliegenden Beispiel ist ein Frontgewicht 80 im Frontkraftheber 50 gehalten. Dieses dient dem Schwerpunktausgleich und dem Masseausgleich des Fahrzeugs. Das Ankoppeln des Frontgewichts 80 erfolgt durch Heranfahren an das Gewicht, welches auf dem Boden platziert ist. Der Frontkraftheber 50 wird in eine untere Position gefahren und das Gewicht 80 wird am Gestänge verriegelt. Durch Anheben des Frontkrafthebers 50 wird das Gewicht 80 in eine Arbeitsposition gebracht.

Der Ankoppelvorgang erfordert das Einsehen des Frontkrafthebers 50. Zunächst wird das Fahrzeug 10 an die Position gefahren und der Frontkraftheber in die untere Position gefahren. Für den Fall, dass der Frontkraftheber 50 im Betriebsmodus für Heckanbaugeräte ist, muss die Bedienperson die Kabine 10 verlassen und das Steuerventil im Frontbereich 30 manuell betätigen, damit der Frontkraftheber 50 in eine untere Position bewegt werden kann. Falls am Heckkraftheber 60 Anbauteile oder -geräte angeschlossen sind, müssen die hydraulischen Verbindungen vorab manuell getrennt werden. Nach gegenwärtigem Stand der Technik ist dies erforderlich, um ein versehentliches Antreiben der Anbauteile oder - geräte zu vermeiden, wenn die Hydraulikkreise unter Druck gesetzt werden. Anschließend muss die Bedienperson von den Kontrollflächen in der Kabine 20 aus den Frontkraftheber 50 absenken. Danach erfolgt das Verbinden des Gestänges des Frontkrafthebers 50 wieder außerhalb der Kabine 20. Die Bedienperson hebt im Anschluss den Frontkraftheber 50 wieder über die Steuerung in der Kabine 20 an. Diese Vorgänge erfordern ein hohes Maß an Koordination für die Bedienperson, gleichzeitig besteht das Risiko der Fehlbedienung.

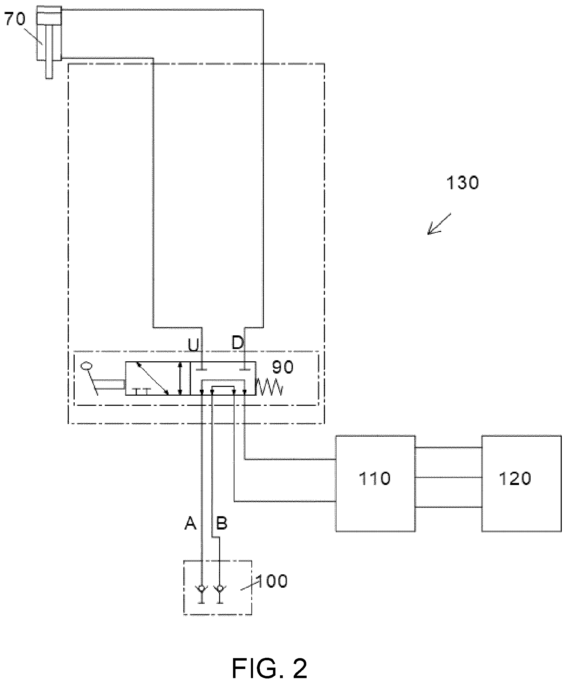

In Figur 2 ist das erfindungsgemäße Hydrauliksystem 10 dargestellt. Dieses besteht aus einem Hauptkreis 120, der von einer oder mehreren Hydraulikpumpen mit Druck beaufschlagt wird. Das hydraulische Steuergerät 110 regelt die Fluidführung zu einem Nebenkreis mit einem Steuerventil 90 und wenigstens einem hydraulischen Aktuator 70 für den Frontkraftheber 50.

Das hydraulische Steuergerät 110 ist gerade bei kleineren Fahrzeugen mit geringerer Antriebsleistung üblicherweise mechanisch angesteuert, so dass der wenigstens eine Schieber des integrierten Proportionalventils über Hebel, Bowdenzüge, Gestänge oder dergleichen bewegt wird. Hierfür ist das hydraulische Steuergerät 110 meist derart am Fahrzeug ausgebildet, dass die Kontrollflächen vom Fahrersitz aus zu erreichen sind. Es ist auch möglich, das hydraulische Steuergerät 110 elektrisch auszuführen mittels eines Servomotors oder einer magnetischen Schaltung. Dies ermöglicht die Anbringung an unzugänglichen Stellen im Fahrzeug, führt gleichzeitig jedoch zu erhöhten Kosten durch die elektrische Infrastruktur und erhöht den Wartungsaufwand.

Der Nebenkreis ist mit dem Steuerventil 90 verbunden. Das Steuerventil erlaubt in einer Position die Durchleitung zum Hydraulikanschluss 100 für Anbauteile und -geräte. Der Anschluss 100 dient der Versorgung von externen Hydraulikverbrauchern und ist bei Nichtbelegung durch die Kuppler gesperrt. In einer weiteren Schaltposition findet eine Durchleitung an den Aktuator des Frontkrafthebers 70 statt. Es sind zwei Leitungen für beide Seiten des Aktuators 70 vorgesehen.

Das Steuerventil 90 und das hydraulische Steuergerät 110 können an einer Rückseite der Fahrerkabine vorgesehen sein. Hierdurch sind die Kontrollflächen von einem Fahrersitz aus zu erreichen und können somit an einer Fensterseite der Kabine 20 vorgesehen sein. Die Ausbildung und Anordnung des Hydrauliksystems 130 erlaubt somit eine Kontrolle von der Kabine 20 aus, und vereinfacht den Ankoppelvorgang mit dem Frontkraftheber 50. Die Bedienperson kann von einer Position in der Kabine 20 die Umschaltung des Steuerventils 90 vornehmen, um die Hydraulik auf den Aktuator 70 des Frontkrafthebers zu schalten. Dadurch wird der Arbeitsschritt vermieden, eventuell angeschlossene Anbauteile und - geräte manuell trennen zu müssen. Weiterhin wird dadurch die Arbeitssicherheit erhöht, da die Gefahr, versehentlich externe Geräte zu aktivieren, nicht mehr vorhanden ist. Ebenfalls kann die Bedienperson von der Kabine 20 das hydraulische Steuergerät manuell für den Betrieb des Nebenkreises aktivieren.

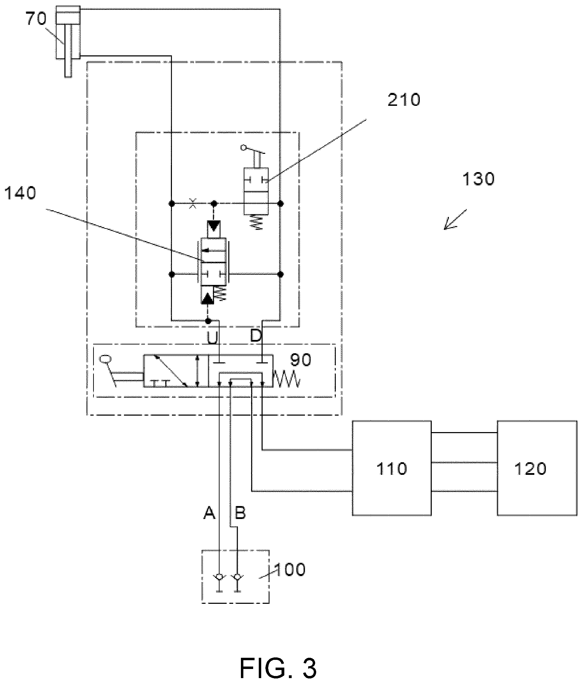

Figur 3 zeigt eine weitere Ausführung des Hydrauliksystems 130. Zusätzlich zu der Ausführung nach Figur 2 ist hier ein Umschaltventil 140 vorgesehen, zum Wechsel zwischen dem einfachwirkenden und doppeltwirkenden Betriebsmodus des Aktuator 70. Die Betätigung des Umschaltventils 140 erfolgt über eine separate Steuerfläche, welche über das Pilotventil 210 mit Druck beaufschlagt wird. Der entstehende Rückstaudruck ist ausreichend, um ein Absenken des Frontkrafthebers zu ermöglichen, ohne dass deswegen in den doppeltwirkenden Betrieb umgeschaltet werden muss. Der einfachwirkende Betriebsmodus erlaubt die Anwendung für Anbauteile und -geräte, bei einer Geländeanpassung. Hierfür wird entsprechend dem Geländeverlauf beim Bearbeiten die untere Kammer des Aktuators 70 mit Druck beaufschlagt und bei Niveauunterschieden angehoben. Bei einer Druckentlastung sinkt der Aktuator 70 bedingt durch das Gewicht des Anbauteils oder -gerätes wieder ab. Jedoch ist dieser Betriebsmodus nicht für das Entkoppeln von kleineren Anbauteilen oder -geräten vorteilhaft, die nur ein geringes Eigengewicht mitbringen, oder für das Absenken des Aktuators im entkoppelten Zustand. Hierfür ist der doppeltwirkende Betriebsmodus vorteilhaft. Somit können beide Betriebsmodi mit der Erfindung verwendet werden. Die Umschaltung 140 kann ebenfalls am Heck des Fahrzeugs 10 in der Nähe der Kabine 20 vorgesehen sein, um eine einfache Zugänglichkeit und Bedienung zu erlauben. Weiterhin kann die Umschaltung 140 in das Steuerventil 90 integriert sein, um Bauraum einzusparen und die Bedienung weiter zu vereinfachen.

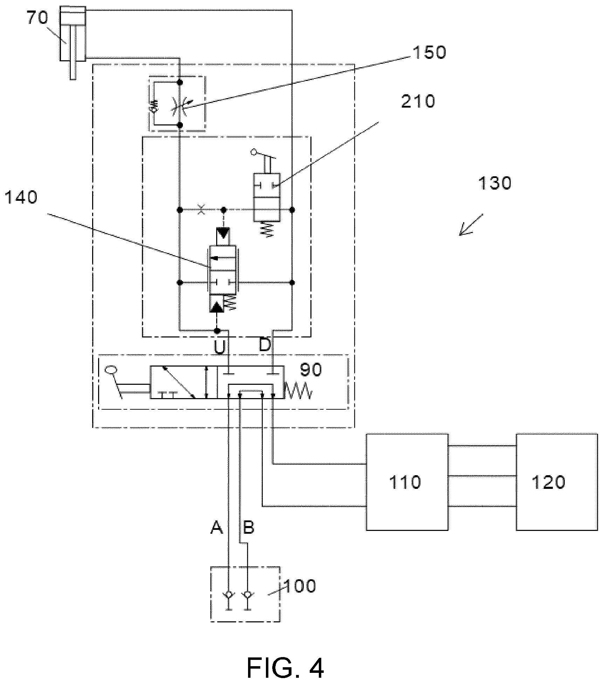

In Figur 4 ist zusätzlich zu der Ausbildung nach Figur 3 eine Drossel 150 vorgesehen, die eine Beeinflussung des Leitungsquerschnitts ermöglicht. Durch die Drossel 150 kann besonders bevorzugt im einfachwirkenden Betriebsmodus Einfluss auf das Absinkverhalten des Frontkrafthebers 50 genommen werden. Gerade in Verwendung mit der Anpassung an den Geländeverlauf kann hier die Ansprechzeit für das Absinken verändert und optimiert werden. Diese Drossel 150 kann mit einem parallel angeordneten Rückschlagventil kombiniert werden, so dass nur die Senkgeschwindigkeit über die Drossel 150 beeinflusst wird. Anstatt der Drossel 150 ist auch der Einsatz eines einstellbaren Volumenstromreglers möglich, mit dem die Senkgeschwindigkeit lastunabhängig eingestellt werden kann. Ebenfalls kann die Drossel 150 zusammen mit dem Steuerventil 90 als Einheit ausgebildet sein. Die Unterbringung kann an einem Bereich nahe der Kabine 20 vorgesehen sein, so dass eine Bedienung vom Fahrersitz möglich ist.

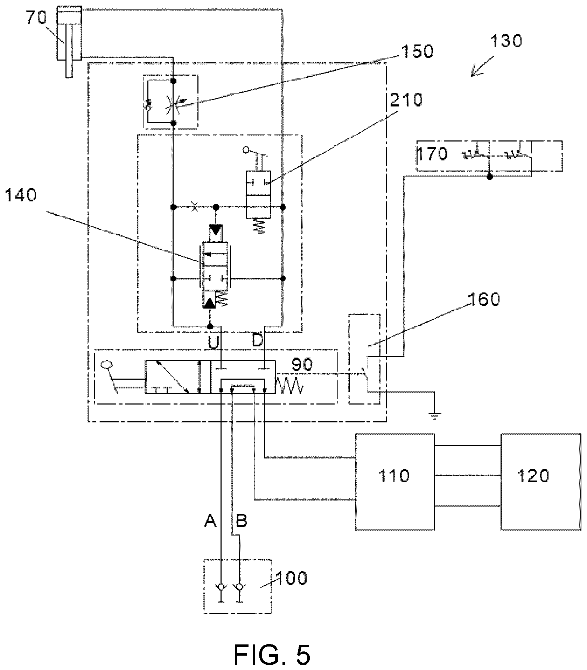

Figur 5 zeigt zusätzlich einen elektrischen Schalter 160, der am Steuerventil 90 ausgebildet ist. Der Schalter ist so vorgesehen, dass dieser bei Aktivierung des Frontkrafthebers 50 einen Stromkreis schließt und so die Kontrolle über die Position des Steuerventils 90 erlaubt. Bei Schließen des Stromkreises wird gleichzeitig eine Kontrollschaltung 170 aktiviert, die wiederrum eine Aktivierung einer Fernbedienung ermöglicht. Auf diese Weise kann bei aktivierter Position des Steuerventils 90 durch die Bedienperson eine Fernbedienung eingesetzt werden, zum Bewegen des Aktuators 70. Durch die elektrische Schaltung ist sichergestellt, dass nur dann eine Verwendung der Fernbedienung stattfinden kann, wenn der Nebenkreis auf den Frontkraftheber 50 selektiv geschaltet ist. Die Fernbedienung kann dabei eine Schaltkulisse an der Front des Fahrzeugs sein. Dabei wird mittels angebrachter Schalter am Fahrzeug der Frontkraftheber bedient. Die Fernbedienung kann jedoch auch an jedem Ort am Fahrzeug außerhalb der Kabine 20 angebracht werden. Die Fernbedienung kann auch ein kabelgebundenes oder kabelloses Handgerät sein, das in einem Radius um das Fahrzeug verwendet werden kann.

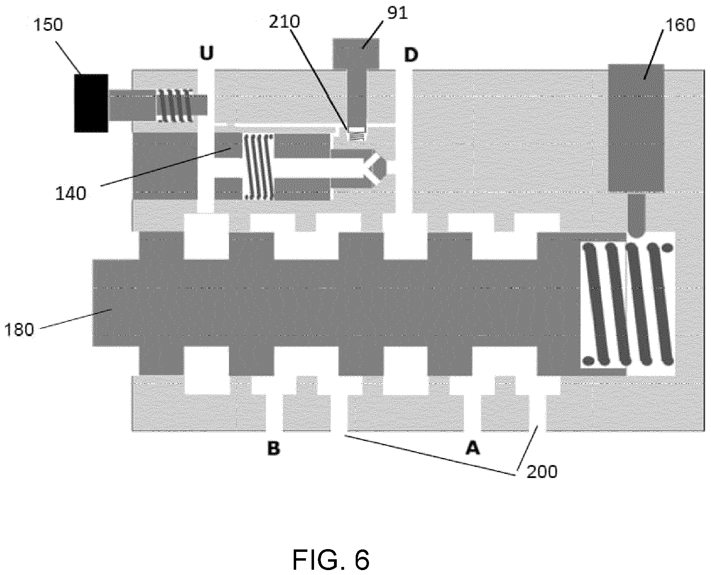

Figur 6 zeigt eine Ausführung des Steuerventils 90 mit den integrierten Funktionen für die Umschaltung zwischen dem Hydraulikanschluss 100 und dem Aktuator 70, für die Umschaltung 140 zwischen dem einfachwirkenden und doppeltwirkenden Betriebsmodus, ein Pilotventil 210 für die Ansteuerung der Umschaltung, für die Drossel 150 und für die elektrische Schaltung 160 zur Positionsabfrage des Steuerventils 90.

Der Schieber 180 ist so ausgebildet, dass er eine Umschaltung des Nebenkreises ermöglicht zwischen der Druckversorgung des Hydraulikanschlusses 100 und dem Aktuator 70. Durch ein horizontales Bewegen in Figur 6 werden entweder die Ausgänge 200 zum Hydraulikanschluss 100 mit Druck beaufschlagt oder in einer Endposition, die einem Verschieben des Kolbens 180 in einen rechten Anschlag entspricht, die Ausgänge U und D zum Aktuator 70. Dabei wird in der Endposition gleichzeitig der Schalter 160 geschlossen, der wiederrum die Verwendung der Fernbedienung ermöglicht. Der Schieber 180 kann entweder mechanisch oder über einen elektrischen Stellantrieb betätigt werden. Die Verwendung eines elektrischen Stellantriebs ermöglicht eine automatische Umschaltung bei einer Betätigung über eine Fernbedienung, z.B. an der Fahrzeugfront.

Oberhalb des Schiebers 180 in Figur 6 ist ein weiterer Schieber vorgesehen zur Umschaltung zwischen dem einfach- und doppeltwirkenden Betriebsmodus für den Aktuator 70. In Figur 6 ist der Betriebsmodus für den doppeltwirkenden Betrieb dargestellt. Durch einen Handgriff 91 kann manuell zwischen beiden Modi umgeschaltet werden.

Im doppeltwirkenden Betrieb wird der Eingangsdruck an den Anschlüssen 200 direkt nach A und B durch das Ventil 90 durchgeleitet.

Im einfachwirkenden Betrieb wird der Druck am Ausgang D über das Umschaltventil 140 begrenzt. Die Betätigung des Umschaltventils 140 erfolgt über eine separate Steuerfläche, welche über das Pilotventil 210 mit Druck beaufschlagt wird. Der entstehende Rückstaudruck ist ausreichend, um ein Absenken des Frontkrafthebers zu ermöglichen, ohne dass deswegen in den doppeltwirkenden Betrieb umgeschaltet werden muss.

Am Ausgang U, welcher auch zum Rückfluss aus der unteren Aktuatorkammer dient, ist die Drossel 150 vorgesehen, die ebenfalls über einen Handgriff manuell verstellt werden kann, so dass der Leitungsquerschnitt bei U verengt oder erweitert werden kann. Diese Drossel 150 kann auch als ein Volumenstromregler ausgeführt sein, der eine konstante und von der Last unabhängige Absenkgeschwindigkeit des Frontkrafthebers ermöglicht. Parallel zur Drossel 150 kann ein Rückschlagventil integriert werden, welches die Wirkung der Drossel 150 auf die Senkbewegung begrenzt. Das Anheben von Lasten wird damit nicht mehr gedrosselt, welches höhere Hebegeschwindigkeiten ermöglicht und bei einem last- und volumenstromgeregelten Hydraulikkreis geringere Verluste erzeugt.

## Patentansprüche

1. Hydrauliksystem (130), aufweisend
einen Hauptkreis (120) des Hydrauliksystems (130), der mit einem hydraulischem Druck beaufschlagt wird,
einen Nebenkreis, des Hydrauliksystems (130), der mit einem hydraulischen Druck beaufschlagt wird,
ein hydraulisches Steuergerät (110), das zur hydraulischen Schaltung zwischen dem Hauptkreis (120) und dem Nebenkreis dient,
einen Frontkraftheber (50), zum Befestigen, Anheben und Absenken von Anbauteilen und -geräten an einer Front des Fahrzeugs, der wenigstens einen hydraulischen Aktuator (70) aufweist,
wobei der Frontkraftheber (50) durch den Nebenkreis mit hydraulischem Druck versorgt wird,
einen Hydraulikanschluss (100) für Anbauteile und -geräte, der am Nebenkreis vorgesehen ist,
ein Steuerventil (90) zum Schalten einer hydraulischen Verbindung des Nebenkreises mit entweder dem Frontkraftheber (50) oder dem Hydraulikanschluss (100) für Anbauteile und -geräte.

2. Hydrauliksystem (130) nach Anspruch 1, **dadurch gekennzeichnet, dass** der Nebenkreis eine Umschaltung (140) des Frontkrafthebers (50) ermöglicht zwischen einem einfachwirkenden und einem doppeltwirkenden Betrieb des hydraulischen Aktuators (70).

3. Hydrauliksystem (130) nach Anspruch 2, **dadurch gekennzeichnet, dass** die Umschaltung (140) als Teil des Steuerventils (90) des Nebenkreises ausgebildet ist.

4. Hydrauliksystem (130) nach Anspruch 3, **dadurch gekennzeichnet, dass** die Umschaltung (140) separat vom Steuerventil (90) betätigt werden kann.

5. Hydrauliksystem (130) nach einem der vorangehenden Ansprüche, **dadurch gekennzeichnet, dass** das Steuerventil (90) eine einstellbare Drossel (150) oder einen einstellbaren Volumenstromregler aufweist, zur Einstellung der Absinkgeschwindigkeit des hydraulischen Aktuators (70).

6. Hydrauliksystem (130) nach einem der vorangehenden Ansprüche, **dadurch gekennzeichnet, dass** die einstellbare Drossel (150) ein parallel geschaltetes Rückschlagventil aufweist.

7. Hydrauliksystem (130) nach einem der vorangehenden Ansprüche, **dadurch gekennzeichnet, dass** das Steuerventil (90) im Nebenkreis einen elektrischen Schalter (160) aufweist, so dass je nach Position des Steuerventils (90) der elektrische Schalter (160) geöffnet oder geschlossen ist.

8. Hydrauliksystem (130) nach Anspruch 6, **dadurch gekennzeichnet, dass** das Hydrauliksystem eine Fernbedienung aufweist, die durch Schließen des elektrischen Schalters (160) aktiviert wird.

9. Hydrauliksystem (130) nach Anspruch 7, wobei die Fernbedienung dazu ausgelegt ist, den Frontkraftheber (50) hydraulisch zu steuern.

10. Hydrauliksystem (130) nach Anspruch 8, **dadurch gekennzeichnet, dass** das hydraulische Steuergerät (120) dazu ausgelegt ist, durch die Fernbedienung gesteuert zu werden.

11. Hydrauliksystem (130) nach einem der vorangehenden Ansprüche, **dadurch gekennzeichnet, dass** das Steuerventil (90) dazu ausgelegt ist, automatisch bei Aktivierung der Fernbedienung zwischen der hydraulischen Verbindung des Nebenkreises mit dem Hydraulikanschluss (100) für Anbauteile und -geräte und dem Frontkraftheber (50) umzuschalten.
